# EUROPÄISCHE PATENTSCHRIFT

(11) **EP 2 456 690 B1**
(45) Veröffentlichungstag und Bekanntmachung des Hinweises auf die Patenterteilung: **05.07.2017**
(21) Anmeldenummer: 10737241.9
(22) Anmeldetag: 18.05.2010
(51) Int. Cl.: B65D 88/68

(54) **EINSPEISEVORRICHTUNG UND VERFAHREN ZUM BETREIBEN EINER SOLCHEN**
FEEDING DEVICE AND METHOD OF OPERATING SUCH A FEEDING DEVICE
DISPOSITIF D'ALIMENTATION ET PROCÉDÉ DE FONCTIONNEMENT D'UN TEL DISPOSITIF

(30) Priorität: 24.07.2009 DE 202009010131 U
(43) Veröffentlichungstag der Anmeldung: 30.05.2012
(73) Patentinhaber: NETZSCH Pumpen & Systeme GmbH, 95100 Selb (DE)
(72) Erfinder: KAMAL, Hisham, 84478 Waldkraiburg (DE); TEKNEYAN, Mikael, 84559 Kraiburg (DE); ROSAM, Markus, 84544 Aschau (DE)
(74) Vertreter: Beyer, Andreas
(86) Internationale Anmeldenummer: PCT/DE2010/000556
(87) Internationale Veröffentlichungsnummer: WO 2011/009424

(56) Entgegenhaltungen:
- EP-A2- 1 721 728
- DE-A1- 2 813 785
- DE-U1- 29 808 800
- GB-A- 2 098 967
- US-A- 3 804 304

## Beschreibung

Die Erfindung bezieht sich auf Einspeisevorrichtungen für Schneckenmaschinen mit einer in einem Aufgabebehälter rotierenden Welle. Die Welle besitzt ein in Richtung zur Längsachse der Welle förderndes schneckenförmiges Transportmittel, das mit einer Zuführhilfe nicht in Wirkverbindung steht.

Die englische Patentanmeldung GB 2 098 967 A offenbart einen Schüttgutbehälter mit einer Vorrichtung zum Austragen von Schüttgut aus einem unteren Auslassstutzen, mit einer im Unterteil des Behälters angeordneten, drehbeweglichen Austragspirale, die sich mit ihrem äusseren Ende in den Auslassstutzen erstreckt und deren innerer Endabschnitt drehbeweglich gelagert ist, mit einem Drehantrieb für die Austragspirale und mit einer Radhalteeinrichtung mit mindestens einem oberhalb der Austragspirale im Behälter drehbeweglich angeordneten Auflockerungsrad zur Auflockerung des jeweils zum Austragen anstehenden Schüttgutanteils, wobei die Drehachse des Auflockerungsrades mit der Drehachse der Austragspirale mindestens angenähert einen rechten Winkel bildet.

Die deutsche Patentschrift DE 10 2008 020 41 B3 bezieht sich auf eine Einspeisevorrichtung für Schneckenmaschinen, insbesondere zur Vermeidung der Brückenbildung in dem zu fördernden Medium. Durch die Erzeugung unsymmetrischer Scherkräfte auf gegenüberliegenden Seiten der Förderschnecke wird die Ausbildung von Texturen im Medium, die zur Brückenbildung führen, vermieden. Dies wird durch zwei Scheibenräder realisiert, welche von der Förderschnecke angetrieben werden. Weiterhin sind die Scheibenräder mit Leisten ausgestattet, die mögliches aufgestautes Material in der Einspeisevorrichtung umwälzen und/oder auflockern.

Aus dem deutschen Gebrauchsmuster DE 298 08 800 U1 geht eine Zuführeinrichtung für Schneckenförderer hervor. Bei dieser Ausführung ist die Förderschnecke gleichzeitig der Antrieb für das Mitnehmerelement der Zuführeinrichtung. Die fünf dargestellten Mitnehmerelemente verbinden zwei Räder, deren Lager auf der gleichen Rotationsachse angeordnet sind. Da die Mitnehmerelemente in die Schneckengänge eingreifen, rotiert die Zuführeinrichtung, sobald die Förderschnecke arbeitet. Der Vorteil dieser Anordnung liegt darin, dass kein zusätzlicher Antrieb für die Zuführeinrichtung benötigt wird. Die gewünschte Vermeidung der Brückenbildung, die sich bei der Förderung schwieriger Fördermedien einstellen sollte, ist jedoch gering.

Der deutschen Übersetzung DE 35 86 241 T2 der europäischen Patentschrift EP 0 185 541 B1 ist ein Schneckenförderer zu entnehmen, bei dem zwei parallel zueinander beabstandet angeordnete Förderschnecken in einem Gehäuse rotieren. Damit das zu fördernde Produkt besser in bzw. zwischen die Schneckengänge gelangt, sind entweder eine senkrecht oder zwei parallel zu den Förderschnecken angeordnete Einzugswalzen mit Flügeln vorgesehen. Die Einzugswalzen mit ihren beweglichen, in das Produkt eingreifenden Flügeln sind oberhalb und bei der Doppelausführung seitlich zu den Förderschnecken angeordnet und unabhängig von Förderschnecken von separaten Antrieben in Rotation versetzt.

Aufgabe der vorliegenden Erfindung ist es, eine Einspeisevorrichtung und ein Verfahren zum Betreiben derselben bereitzustellen, mit der bzw. mit dem eine Brückenbildung, insbesondere bei der Förderung schwieriger Fördermedien, vermeidbar ist. Diese Aufgabe ist erfindungsgemäß gelöst durch eine Vorrichtung gemäß Anspruch 1. Weitere vorteilhafte Merkmale zur Vermeidung der Brückenbildung sind den Merkmalen der Unteransprüche zu entnehmen.

Diese Aufgabe ist ferner durch ein Verfahren gelöst, das die Merkmale des Anspruchs 8 umfasst.

Die erfindungsgemäße Einspeisevorrichtung für Schneckenmaschinen ist mit einer in einem Aufgabebehälter rotierenden Welle versehen. In Richtung der Längsachse der rotierenden Welle ist eine Förderschnecke angeordnet. Dem Aufgabebehälter ist an jeder Längsseite mindestens ein Scheibenrad zugeordnet, wobei jedes Scheibenrad mit einem separaten Antrieb ausgestattet ist. Um eine Brückenbildung von verdichteten Fördermedien im Aufgabebehälter zu vermeiden und um das verdichtete Fördermedium zwischen den Scheibenrädern wieder frei zu geben, treiben die Antriebe die gegenüberliegenden Scheibenräder mit unterschiedlicher Drehzahl an.

Diese Differenzdrehzahl erzeugt beim Umwälzen des zwischen den Scheibenrädern befindlichen Fördermediums eine Scherwirkung. Somit kommt es während der Umwälzung zu einem Auflockern des verdichteten Materials.

Darüber hinaus sind die Scheibenräder auf ihren gegenüberliegenden Seiten mit einer strukturierten Oberfläche versehen. Durch die strukturierte Oberfläche der Scheibenräder wird das verdichtete Fördermedium im Aufgabebehälter transportiert. Das verdichtete Fördermedium wird zwischen den Scheibenrädern angehoben und an einem definierten Punkt in dem Aufgabebehälter wieder abgegeben. Der Transport wird dadurch realisiert, dass durch die strukturierte Oberfläche zwischen dem verdichteten Fördermedium und den Scheibenrädern ein Wirkzusammenhang entsteht, der ebenfalls dazu beiträgt, eine Brückenbildung zu vermeiden.

In einer weiteren bevorzugten Ausführungsform weisen beide Seiten der Scheibenräder strukturierte Oberflächen auf. Durch das Aufbringen einer strukturierten Oberfläche auf beide Seiten der Scheibenräder sind diese beidseitig verwendbar. Ist die strukturierte Oberfläche einer Seite des Scheibenrades verschlissen, so kann das Scheibenrad gedreht und von der anderen Seite verwendet werden. Durch diese Ausgestaltung ist es möglich, Scheibenmaterial einzusparen und Lagerkosten für Ersatzscheibenräder zu reduzieren. Es ist notwendig, an jeder Längsseite des Aufgabebehälters mehrere Scheibenräder anzuordnen. Weiterhin sind die Scheibenräder zur axialen Längsachse der rotierenden Welle in Längsrichtung versetzt angeordnet. Durch diesen Versatz der Scheibenräder wird erreicht, dass sich die Scheibenräder nur in einem gewissen Bereich synchron zueinander bewegen und an den Stellen, an denen keine Überschneidung gegeben ist, das verdichtete Fördermedium freigeben.

Die Scheibenräder können gegen oder in Förderrichtung der Schnecke rotatorisch bewegbar sein. Um verdichtete Fördermedienbrücken zu zerstören, ohne die Fördermedien im Aufgabebehälter zu transportieren, sind die Scheibenräder vorzugsweise gegenläufig antreibbar.

Die Scheibenkränze der Scheibenräder können über mindestens zwei Speichen mit einer Achse verbunden sein. Über die Achse sind die Scheibenräder jeweils mit einem separaten Antrieb antreibbar. Weiterhin können die Speichen der Scheibenräder ebenfalls mit einer strukturierten Oberfläche versehen sein.

Das erfindungsgemäße Verfahren zum Betreiben einer Einspeisevorrichtung beruht darauf, dass jedes Scheibenrad separat angetrieben wird. Das verdichtete Fördermedium, in dem Aufgabebehälter, wird durch eine strukturierte Oberfläche der Scheibenräder transportiert bzw. umgewälzt. Hierdurch wird eine Brückenbildung vermieden und/oder bestehende Brücken werden zerstört. Die Scheibenräder werden entweder gegen oder in Förderrichtung einer Schnecke rotatorisch bewegt. Die Freigabe des verdichteten Fördermediums wird unterstützt durch die Differenzdrehzahl der beiden gegenüberliegenden Scheibenräder. In einer weiteren Ausführungsform werden die Scheibenräder gegenläufig angetrieben, wodurch eine Brückenbildung im Aufgabebehälter vermieden werden kann. Zudem kann die Grunddrehzahl und die Differenzdrehzahl an die besonderen Bedürfnisse des jeweiligen Fördermediums angepasst werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt schematisch den Aufbau einer Einspeisevorrichtung.
Figur 2 zeigt verschiedene Bewegungsrichtungen der Scheibenräder.
Figur 3 zeigt den schematischen Aufbau eines Scheibenrades mit strukturierter Oberfläche in einer bevorzugten Ausführungsform.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

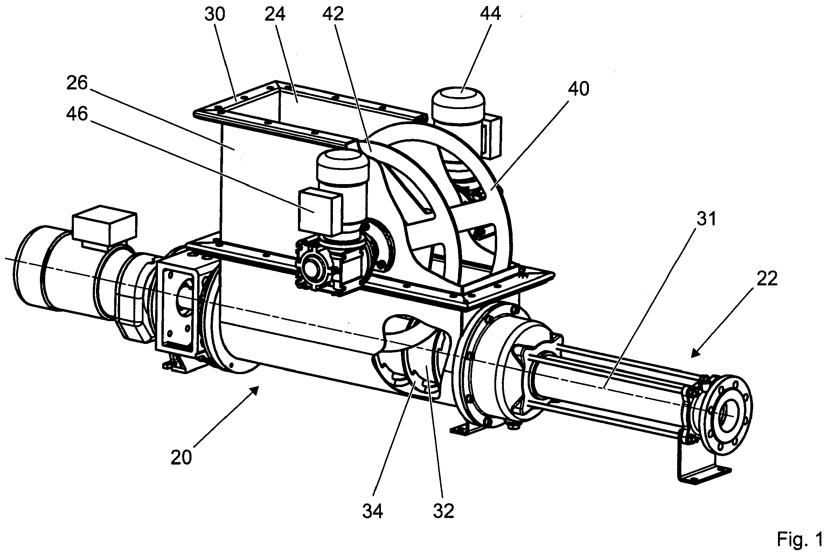

**Figur 1** zeigt schematisch den Aufbau einer Einspeisevorrichtung 20. Im Inneren des Aufgabebehälters 30 sind ein erstes Scheibenrad 40 und ein zweites Scheibenrad 42 an Längsseiten 24 und 26 angeordnet. Dem ersten Scheibenrad 40 ist ein erster Antrieb 44 und dem zweiten Scheibenrad 42 ein zweiter Antrieb 46 zugeordnet. Über die zwei Antriebe 44 und 46 sind die zwei Scheibenräder 40 und 42 unabhängig und getrennt voneinander rotatorisch antreibbar. In Längsrichtung des Aufgabebehälters 30 ist eine Schneckenmaschine 22 angeordnet. Innerhalb der Schneckenmaschine 22 ist eine Welle 32 angeordnet, auf welcher eine Förderschnecke 34 angebracht ist. Die Welle 32 verläuft entlang einer Längsachse 31.

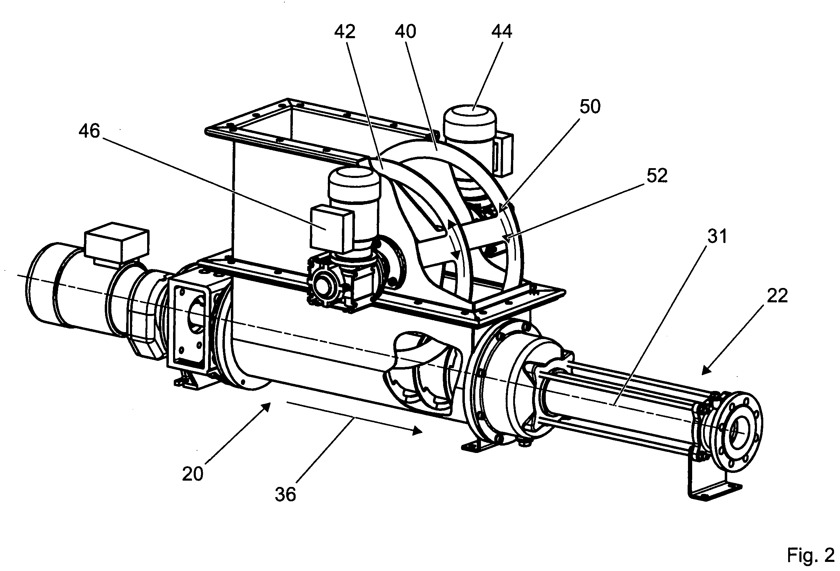

In der **Figur 2** sind verschiedene Bewegungsrichtungen 50 und 52 der Scheibenräder 40 und 42 durch Drehrichtungspfeile dargestellt. Entlang der Längsachse 31 verläuft auch die Förderrichtung 36 der Schneckenmaschine 22. Die Scheibenräder 40 und 42 sind entweder in einer ersten Bewegungsrichtung 50 mit der Förderrichtung 36 oder in einer zweiten Bewegungsrichtung 52 entgegen der Förderrichtung 36 bewegbar. Weiterhin ist es denkbar, beispielsweise das erste Scheibenrad 40 im der ersten Bewegungsrichtung 50 und das zweite Scheibenrad 42 in der zweiten Bewegungsrichtung 52 rotatorisch zu bewegen.

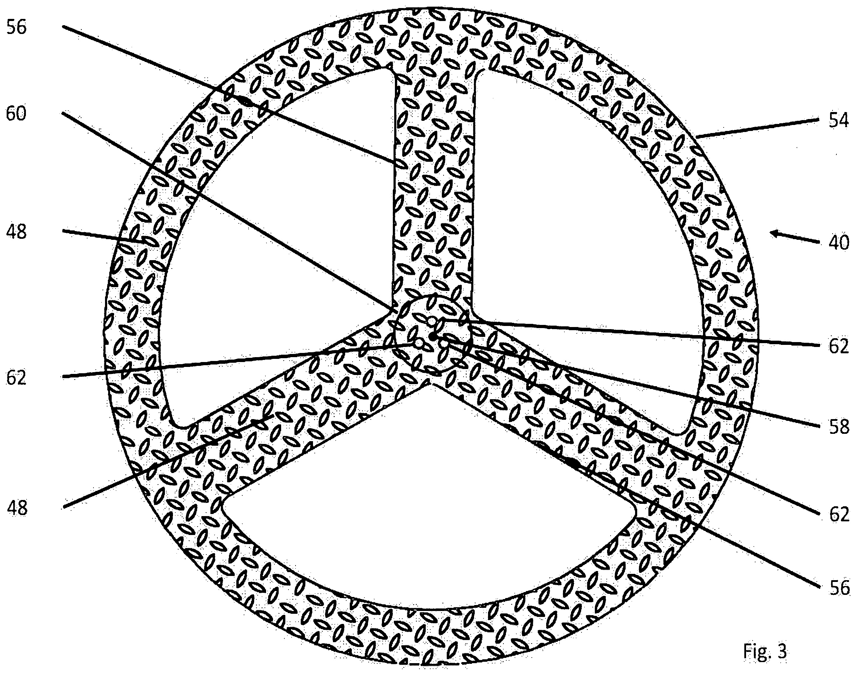

**Figur 3** zeigt den schematischen Aufbau eines Scheibenrades 40 mit strukturierter Oberfläche 48, in einer bevorzugten Ausführungsform. Das Scheibenrad 40 besteht aus einem Scheibenkranz 54 und mehreren Speichen 56. Die Speichen 56 verlaufen von einer Achse 58 nach außen zum Scheibenkranz 54. Das Scheibenrad 40 ist über mehreren Befestigungspunkte 62 mit einer Welle 60 verbunden. Diese Welle 60 verläuft entlang der Achse 58. Der Scheibenkranz 54 und/oder die Speichen 56 sind mit einer strukturierten Oberfläche 48 versehen. Jedes Scheibenrad 40 wird über die Achse 58 von einem separaten Antrieb (nicht dargestellt) radial bewegt.

Die Erfindung wurde unter Bezugnahme auf eine bevorzugte Ausführungsform beschrieben. Es ist jedoch für einen Fachmann klar, dass Abwandlungen oder Änderungen der Erfindung gemacht werden können, ohne dabei den Schutzbereich der nachstehenden Ansprüche zu verlassen.

### Bezugszeichen

- 20: Einspeisevorrichtung
- 22: Schneckenmaschine
- 24: Längsseite
- 26: Längsseite
- 30: Aufgabebehälter
- 31: Längsachse
- 32: Welle
- 34: Schnecke
- 36: Förderrichtung der Förderschnecke
- 40: erstes Scheibenrad
- 42: zweites Scheibenrad
- 44: erster Antrieb
- 46: zweiter Antrieb
- 48: strukturierte Oberfläche
- 50: erste Bewegungsrichtung
- 52: zweite Bewegungsrichtung
- 54: Scheibenkranz
- 56: Speiche
- 58: Achse
- 60: Welle
- 62: Befestigungspunkte

## Patentansprüche

1. Einspeisevorrichtung (20) für Schneckenmaschinen (22) mit einer in einem Aufgabebehälter (30) rotierenden Welle (32), die eine in Richtung zur Längsachse (31) der rotierenden Welle (32) fördernde Schnecke (34) besitzt, wobei im Aufgabebehälter (30) jeder Längsseite (24, 26) des Aufgabebehälters mindestens ein Rad zugeordnet ist, das mit der Schnecke (34) nicht in Wirkverbindung steht, wobei jedes Rad mit mindestens einem separaten Antrieb (44, 46) rotatorisch bewegbar ist, wobei
- jedes Rad ein Scheibenrad (40, 42) ist,
- jeder Längsseite (24, 26) mehrere Scheibenräder (40, 42) zugeordnet sind, die axial zur Längsachse (31) der rotierenden Welle (32) versetzt sind,
- die Antriebe (44, 46) dazu ausgeführt sind, die gegenüberliegenden Scheibenräder (40, 42) mit unterschiedlicher Drehzahl anzutreiben, und
- die Scheibenräder (40, 42) auf ihren gegenüberliegenden Seiten mit einer strukturierten Oberfläche (48) versehen sind.

2. Einspeisevorrichtung (20) nach Anspruch 1,
**dadurch gekennzeichnet, dass** die Scheibenräder (40, 42) auf beiden Seiten mit einer strukturierten Oberfläche (48) versehen sind.

3. Einspeisevorrichtung (20) nach Anspruch 1 oder 2,
**dadurch gekennzeichnet, dass** ein verdichtetes Fördermedium im Aufgabebehälter (30) durch die Scheibenräder (40, 42) bewegbar und/oder auflockerbar ist.

4. Einspeisevorrichtung (20) nach einem der Ansprüche 1 bis 3,
**dadurch gekennzeichnet, dass** die Antriebe (44, 46) dazu ausgeführt sind, die Scheibenräder (40, 42) gleichsinnig oder gegensinnig zur Förderrichtung (36) der Schnecke (34) rotatorisch zu bewegen.

5. Einspeisevorrichtung (20) nach einem der Ansprüche 1 bis 4,
**dadurch gekennzeichnet, dass** die Antriebe (44, 46) dazu ausgeführt sind, die Scheibenräder (40, 42) gegenläufig anzutreiben.

6. Einspeisevorrichtung (20) nach einem der Ansprüche 1 bis 4,
**dadurch gekennzeichnet, dass** Scheibenkränze (54) der Scheibenräder (40, 42) über mindestens zwei Speichen (56) mit einer Achse (58) verbunden sind.

7. Einspeisevorrichtung (20) nach Anspruch 6,
**dadurch gekennzeichnet, dass** die Speichen (56) mit einer strukturierten Oberfläche (48) versehen sind.

8. Verfahren zum Betreiben einer Einspeisevorrichtung (20) nach einem der Ansprüche 1 bis 7 mit den Schritten:
• separates Drehantreiben jedes Scheibenrads (40, 42) gleichsinnig oder gegensinnig zur Förderrichtung (36) der Schnecke (34); und
• Bewegen und/oder Auflockern eines verdichteten Fördermediums in dem Aufgabebehälter (30) durch die Scheibenräder (40, 42), wobei gegenüberliegende Scheibenräder (40, 42) mit unterschiedlicher Drehzahl angetrieben werden.

9. Verfahren zum Betreiben einer Einspeisevorrichtung (20) nach Anspruch 8, **dadurch gekennzeichnet, dass** die Scheibenräder (40, 42) gegenläufig angetrieben werden.

## Claims

1. A feeding device (20) for worm gear machines (22), including a shaft (32) which rotates in a feed container (30) and has worm gear (34) conveying in the direction of the longitudinal axis (31) of the rotating shaft (32), wherein at least one wheel, which is not operatively connected to the worm gear (34), is assigned to each longitudinal side (24, 26) in the feed container (30), wherein each wheel can be moved rotationally by at least one separate drive (44, 46), wherein
- each wheel is a disk wheel (40, 42),
- multiple disk wheels (40, 42) are assigned to each longitudinal side (24, 26), said wheels being offset axially with regard to the longitudinal axis (31) of the rotating shaft (32),
- the drives (44, 46) being configured to drive the opposing disk wheels (40, 42) at different rotational speeds, and
- the disk wheels (40, 42) being provided with a structured surface (48) on their sides facing each other.

2. The feeding device (20) according to claim 1, **characterized in that** the disk wheels (40, 42) are provided with a structured surface (48) on both sides.

3. The feeding device (20) according to claim 1 or 2, **characterized in that** a compacted medium conveyed can be moved and/or loosened by the disk wheels (40, 42) in the feed container (30).

4. The feeding device (20) according to any one of claims 1 to 3, **characterized in that** the drives (44, 46) are configured to move the disk wheels (40, 42) rotationally in the same direction or in the opposite direction from the delivery direction (36) of the worm gear (34).

5. The feeding device (20) according to any one of claims 1 to 4, **characterized in that** the drives (44, 46) are configured to drive the disk wheels (40, 42) in opposite directions.

6. The feeding device (20) according to any one of claims 1 to 4, **characterized in that** disk rings (54) of the disk wheels (40, 42) are connected to an axle (58) by at least two spokes (56).

7. The feeding device (20) according to claim 6, **characterized in that** the spokes (56) are provided with a structured surface (48).

8. A method for operating a feeding device (20) according to any one of claims 1 to 7, comprising the steps:
• separate rotational drive of each disk wheel (40, 42) in the same direction or in the opposite direction from the direction of conveyance (36) of the worm gear (34), and
• moving and/or loosening a compacted conveyed medium in the feed container (30) by means of the disk wheels (40, 42), wherein opposing disk wheels (40, 42) are driven at different rotational speeds.

9. The method for operating a feeding device (20) according to claim 8, **characterized in that** the disk wheels (40, 42) are driven in opposite directions.

## Revendications

1. Dispositif d'alimentation (20) pour machines à vis sans fin (22) avec un arbre (32) tournant dans un récipient de chargement (30), comportant une vis sans fin (34) transportant dans la direction de l'axe longitudinal (31) de l'arbre tournant (32), dans lequel, dans le récipient de chargement (30), au moins une roue est associée à chaque côté longitudinal (24, 26) du récipient de chargement, laquelle n'est pas en liaison active avec la vis sans fin (34), chaque roue étant déplaçable en rotation par au moins un entraînement (44, 46) séparé, dans lequel
- chaque roue est une roue à disque (40, 42),
- plusieurs roues à disque (40, 42) sont associées à chaque côté longitudinal (24, 26), décalées axialement par rapport à l'axe longitudinal (31) de l'arbre tournant (32),
- les entraînements (44, 46) sont agencés pour entraîner les roue à disque (40, 42) se faisant face à une vitesse de rotation différente, et
- les roues à disque (40, 42) sont pourvues d'une surface structurée (48) sur leurs faces opposées.

2. Dispositif d'alimentation (20) selon la revendication 1,
**caractérisé en ce que** les roues à disque (40, 42) sont pourvues d'une surface structurée (48) sur leurs deux faces.

3. Dispositif d'alimentation (20) selon la revendication 1 ou 2,
**caractérisé en ce qu'**un milieu à transporter compacté peut être déplacé et/ou décompacté par les roues à disque (40, 42) dans le récipient de chargement (30).

4. Dispositif d'alimentation (20) selon l'une des revendications 1 à 3,
**caractérisé en ce que** les entraînements (44, 46) sont agencés pour déplacer en rotation les roues à disque (40, 42) dans le même sens ou en sens inverse par rapport à la direction de transport (36) de la vis sans fin (34).

5. Dispositif d'alimentation (20) selon l'une des revendications 1 à 4,
**caractérisé en ce que** les entraînements (44, 46) sont conçus pour entraîner les roues à disque (40, 42) en sens contraires.

6. Dispositif d'alimentation (20) selon l'une des revendications 1 à 4,
**caractérisé en ce que** des jantes de disque (54) des roues à disque (40, 42) sont reliées à un axe (58) par au moins deux rayons (56).

7. Dispositif d'alimentation (20) selon la revendication 6,
**caractérisé en ce que** les rayons (56) sont pourvus d'une surface structurée (48).

8. Procédé de fonctionnement d'un dispositif d'alimentation (20) selon l'une des revendications 1 à 7, comprenant les étapes suivantes :
• entraînement en rotation séparé de chaque roue à disque (40, 42) dans le même sens ou en sens inverse par rapport à la direction de transport (36) de la vis sans fin (34) ; et
• déplacement et/ou décompactage d'un milieu à transporter compacté dans le récipient de chargement (30) par les roues à disque (40, 42), des roues à disque (40, 42) se faisant face étant entraînées à une vitesse de rotation différente.

9. Procédé de fonctionnement d'un dispositif d'alimentation (20) selon la revendication 8,
**caractérisé en ce que** les roues à disque (40, 42) sont entraînées en sens contraires.
